# EUROPÄISCHE PATENTSCHRIFT

(11) **EP 0 799 767 B1**
(45) Veröffentlichungstag und Bekanntmachung des Hinweises auf die Patenterteilung: **08.05.2002**
(21) Anmeldenummer: 97104910.1
(22) Anmeldetag: 22.03.1997
(51) Int. Cl.: B64D 11/00, B60R 7/06, E05D 5/02, B65D 43/16

(54) **Klappe für Ablagefächer**
Cover for storage compartment
Rolet pour un compartiment de rangement

(30) Priorität: 03.04.1996 DE 29605942 U; 01.07.1996 DE 29611455 U
(43) Veröffentlichungstag der Anmeldung: 08.10.1997
(73) Patentinhaber: Stükerjürgen, Ferdinand, 33397 Rietberg-Varensell (DE)
(72) Erfinder: Stükerjürgen, Ferdinand, 33397 Rietberg-Varensell (DE)
(74) Vertreter: Strauss, Hans-Jochen, Dipl.-Phys., Dr.

(56) Entgegenhaltungen:
- EP-A- 0 350 303
- EP-A- 0 557 267

## Beschreibung

Die Erfindung betrifft eine Klappe für Ablagefächer, insbesondere für Gepäckablagen (Hat-Racks) aus Kunststoff für Land-, Wasser- und Luftfahrzeuge; sie betrifft ferner Mittel zum Anbringen von Beschlägen zum Schwenken solcher Klappen, die ihrerseits Aufnahmen für die Befestigungsmittel aufweisen.

In Land-, Wasser- und Luftfahrzeugen werden Ablagefächer vorgesehen, die zur Aufbewahrung unterschiedlicher Gerätschaften, aber auch (als Hat-Rack) zur Unterbringung von Handgepäck und Oberbekleidungsstücken der Passagiere dienen. Derartige Ablagen werden während der Fahrt/des Fluges mit Klappen verschlossen, die ein Herausfallen bei unruhiger Fahrt/Flug sicher verhindern. Solche Klappen werden aus Kunststoff hergestellt, wobei wegen der Stabilität die Wabenbauweise mit erheblichem Material- und Arbeitsaufwand benutzt wird.

Vom Dokument EP 0 350 303 ist ein Ablagefach bekannt mit einer Abdeckklappe gemäß dem Oberbegriff des Anspruchs 1. Die Klappe wird separat aus Kunststoffprepregs hergestellt.

Solche Klappen sind an vorhandene Fahrzeug-Innenstrukturen im allgemeinen mit Scharnier anzulenken; dazu sind die Scharnierteile zum einen an diesen Innen-Strukturen und zum anderen an dem Extrusionsprofil festzulegen. Wegen der Struktur dieser so hergestellten Klappenblätter stößt dieses Festlegen auf Schwierigkeiten. Bekannt ist, von der Rückseite des Klappenblattes her eingesetzte, durch verschweißen oder Verkleben festgesetzte Dübel zu benutzen, die dann die Schrauben aufnehmen, mit denen die Scharniere angeschlagen werden. Bei dieser Art der Befestigung müssen die Dübel sowohl in der Unter- als auch in dem Oberseitenplatte der Klappe verankert sein, um hinreichend Halt zu finden. Alternativ lassen sich die stranggepreßten Profilabschnitte mit Aufnahmetaschen versehen, in die Scharnier-Aufnahmen eingesetzt werden, die wiederum die Aufnahmen für die Befestigungsschrauben beispielsweise in Form von Schraubhülsen aufweisen. Es hat sich nun gezeigt, daß auch die in Aufnahmetaschen eingesetzten Scharnier-Aufnahmen mit ihren Aufnahmen für die Befestigungsschrauben die geforderten Belastungen mit Sicherheit auszuhalten in der Lage sind.

Hier setzt die Erfindung ein, der die Aufgabe zugrundeliegt, eine Abdeckklappe vorzuschlagen, die wirtschaftlicher und material- und gewichtssparender herstellbar ist, die den Anforderungen an Fahrzeug-Sicherheit genügt und so sicher einsetzbar ist; in Weiterführung der Aufgabenstellung ist ein Befestigungseinsatz für einen Beschlag für eine solchen Klappe vorzuschlagen, bei dem diese Nachteile vermieden sind, und der einfach herstellbar sowie wirtschaftlich einsetzbar ist.

Diese Aufgabenstellung wird gelöst durch die Merkmale des Hauptanspruchs; vorteilhafte Weiterbildungen und bevorzugte Ausführungsformen beschreiben die Unteransprüche.

Durch die Ausbildung der Abdeckklappe als extrudiertes Kunststoff-Klappenblatt mit mindestens einer spritzgegossenen Kunststoff-Endkappe wird die Möglichkeit eröffnet, das Klappenblatt als Vielkammerprofil in Art einer Doppelstegplatte zu extrudieren, das endlos gefertigt, auf das gewünschte Maß abgelängt werden kann. Das abgelängte Kunststoff-Klappenblatt wird dann zumindest an einer Seite mit einem in Spritzgußtechnik hergestellten Formstück, der Kunststoff-Endkappe, verschlossen, wobei die noch offene freie Seite mit einer Kunststoff-Randabdeckung abgedeckt wird. Vorteilhaft werden an beiden Seiten gespritzte Kunststoff-Endkappen vorgesehen, die dann vorzugsweise spiegelsymmetrisch zueinander ausgebildet sind. Die offenen Kanten der Kunststoff-Klappenblätter oder aber auch von spritzgegossenen Kunststoff-Endkappen können mit Kunststoff-Randabdeckungen verschlossen werden. So werden beispielsweise bei zwei aneinanderstoßenden Kunststoff-Klappen die aneinandergrenzenden Kanten, die gerade ausgebildet sind, lediglich mit einer Kunststoff-Seitenabdeckung versehen.

Jede der Kunststoff-Endkappe weist Aufnahmen für die die Anlenkung an das Fahrzeug bewirkenden, für die Klappenbewegung notwendigen Scharniere auf. Dazu werden von der Klappen-Rückseite her Dübel eingesetzt, die durch Verschweißen oder Verkleben festgesetzt sind. Diese Dübel nehmen dann die Schrauben auf, mit denen die Scharniere angeschlagen werden. Alternativ lassen sich die stranggepreßten Profilabschnitte mit Aufnahmetaschen versehen, in die im Spritzgießverfahren hergestellte Scharnier-Aufnahmen eingesetzt werden, die wiederum die Aufnahmen für die Befestigungsschrauben beispielsweise in Form von Schraubhülsen aufweisen. Schließlich ist es möglich, die im Spritzgießverfahren hergestellten Endkappen so auszubilden, daß sie Schraubhülsen aufweisen; mittels dieser Schraubhülsen und durch diese geführte Schrauben können Schraubverbindungen für die Scharniere hergestellt und letztere befestigt werden.

Um die Kunststoff-Klappen für den Benutzer der Ablage öffenbar auszubilden, ist ein Verschluß vorgesehen. Für diesen Verschluß weist das Klappenblatt vorzugsweise mittig eine taschenartig ausgebildete Ausnehmung auf, in die ein den Klappenverschluß mit Griffplatte und Sperrriegel aufnehmendes Spritzgußteil einsetzbar und eingesetzt fixierbar ist. Auch hier ist das Spritzgußteil mit zweckentsprechenden Mitteln versehen, die ein Befestigen der Verschlußteile an dem Kunststoff-Klappenblatt erlauben. Vorteilhaft werden in die drei offenen Seiten des Ausschnittes zwei Rahmen-Seitenteile bzw. ein Rahmen-Mittelteil aus Kunststoff formschlüssig eingefügt, in die beim Herstellen, vorzugsweise beim Spritzgießen, metallische Einlagen eingesetzt sind, die beim Spritzgießen umspritzt werden; diese metallischen Einlagen dienen der Befestigung des Klappenverschlusses, die mit Schrauben, Nieten o.dgl. erfolgen kann.

Um die Kunststoff-Klappe aus Kunststoff-Endkappe und Kunststoff-Klappenblatt zusammenfügen zu können, sind beide so ausgeformt, daß sie sich teilweise überlappen, wobei die überlappenden flächigen Teile in unterschiedlichen, durch die Steghöhe gegebenen Höhen liegen. Dies wird bei dem Kunststoff-Klappenblatt dadurch erreicht, daß die eine Seitenfläche des Vielkammerprofils - etwa durch Fräsen - abgetragen wird, so daß lediglich die andere Seitenfläche mit den Stegen verbleibt. Das Spritzgußteil ist so ausgeformt, daß die zu der ausgenommenen Seite korrespondierende Seitenfläche soweit zurückspringt, daß nach dem Zusammenfügen der ausgenommene Bereich abgedeckt ist; die andere Seitenfläche der Kunststoff-Endkappe ist so ausgebildet, daß sie an die nicht ausgenommene Seitenfläche des Kunststoff-Klappenblattes stumpf anstößt; dabei entspricht der Abstand der beiden Seitenflächen der Steghöhe. Auch die Kunststoff-Endkappen weisen vorteilhaft zur Aussteifung Stege rechtwinklig zu den Seitenplattenflächen auf, die korrespondierend zu den Stegen des Kunststoff-Klappenblattes so angeordnet sind, daß sie nach dem Zusammenfügen an diesen anliegen.

Zur Vergrößerung der Stabilität, insbesondere gegenüber Verwindungen, sind Ober- oder Unterseitenplatte des Kunststoff-Klappenblätter so ausgeformt, daß sie im Abstand zur Platten-Endkante eine quer zur Stegrichtung verlaufende Verstärkung in Form eines eingesetzten Steges oder einer eingeprägten Nut aufweisen. Dazu wird die Ober- oder die Unterseitenplatte des stranggepreßten Profilabschnittes einschließlich der Stege mit einer Nut versehen, in die der quer verlaufende Verstärkungssteg eingeschweißt oder eingeklebt wird. Alternativ wird - unter Material-Erwärmung - eine Nut der Rückseitenplatte des stranggepreßten Profilabschnittes eingedrückt, wobei das Material der Stege des Strangpreßprofils im Bereich der Nut verdrängt ist. Diese Verstärkung bewirkt gerade nahe den Endbereichen eine erhebliche Aussteifung des Vielkammerprofils.

Vorteilhaft ist eine der Seitenflächen der Kunststoff-Endkappe mit Zungen versehen, die derart angeordnet sind, daß sie beim Zusammenfügen in zumindest einige der Hohlkammern des extrudierten und ausgenommenen Kunststoff-Klappenblattes einsetz- und dort fixierbar sind. Durch diese Zungen wird die Stabilität der Verbindung erhöht, so daß auch bei hohen Anforderungen und bei rauhem Betrieb die Sicherheit des Klappenverschlusses gegeben ist.

Zur Verbindung von Kunststoff-Klappenblatt und Kunststoff-Endkappe sind die Berührungsstellen von Kunststoff-Endkappe und Klappenblatt verschweißt. Dieses Verschweißen erfolgt dabei mit den aus der Kunststoff-Technik bekannten Schweißverfahren. Alternativ sind die Berührungsstellen von Kunststoff-Endkappe und Klappenblatt verklebt. Auch hierfür sind für (nahezu) alle Kunststoffe geeignete Kleber bekannt. Dabei versteht es sich von selbst, daß Art und Herstellung der Verbindung so erfolgen, daß diese den Anforderungen, insbesondere den Sicherheitsanforderungen entspricht.

Um den Sicherheitsanforderungen insbesondere für Luftfahrzeuge nachkommen zu können, wird als Kunststoff für Extrusion und Spritzguß vorteilhaft ein amorphes Thermoplast, wie beispielsweise Polyetherimide, eingesetzt. Kunststoffe auf dieser Basis lassen sich sowohl durch Extrudieren als auch durch Spritzgießen verarbeiten; sie sind bei guter Verarbeitungsfähigkeit flammwidrig und raucharm im Brandfall. Diese Kunststoffe können dabei auch mit Faserverstärkungen (Glasfaser, Kohlenstoffaser) versehen sein, um ihre Steifigkeit und Dimensionsstabilität zu erhöhen. Diese so ausgebildeten Klappen zeichnen sich darüberhinaus durch ein hervorragendes Schallverhalten sowohl in Bezug auf Schallreflexionen als auch auf Köperschall-Leitung aus, so daß der Geräuschpegel mit diesen Klappen gesenkt werden kann. In die in die Unterseitenplatte oder die Oberseitenplatte eingebrachte Aufnahmeöffnung ist eine trogförmig ausgebildete Scharnieraufnahme als Befestigungseinsatz im wesentlichen formschlüssig eingesetzt. Durch diese Ausbildung wird eine Befestigungsmöglichkeit geschaffen, ie in einfacher Weise zum Einbau eines Scharniers in ein doppelstegplattenartiges Extrusionsprofil eingesetzt werden kann; dazu bedarf es lediglich einer Öffnung in dem Unter- oder dem Oberseitenblatt.

Vorteilhaft ist die Scharnieraufnahme als im wesentlichen rechteckiger Einsatz ausgebildet, dessen Höhe etwa der Höhe der Längsstege entspricht; diese Höhe gestattet, daß sich der Einsatz an der anderen Platte abstützt. Die Aufnahmeöffnung entspricht dabei der Form des Einsatzes, so daß zumindest im Bereich des oberen Randes des Troges ein Formschluß möglich ist. In analoger Weise läßt sich die Scharnieraufnahme auch mit rundem Querschnitt herstellen.

Zumindest ist die Scharnieraufnahme als vorzugsweise als SpritzgußTeil herstellbarer Kunststoff-Einsatz ausgebildet; diese Ausbildung erlaubt eine Anpassung an den Kunststoff des Extrusionsprofils, sowie eine vereinfachte und damit kostengünstige Herstellung. Im Inneren des Troges der Scharnieraufnahme sind Rastmittel vorgesehen, die mit Rastnasen an dem Befestigungseinsatz derart zusammenwirken, daß der in den Trog eingesetzte Befestigungseinsatz nach Einrasten gesichert ist. Dadurch wird der Befestigungseinsatz zumindest bei der Montage in einfacher Weise festlegbar.

Eine vorteilhafte Alternativform ist dadurch gegeben, daß der spritzgegossene Dübel der Scharnieraufnahme den Befestigungseinsatz als umspritztes Einsatzteil enthält. Dazu wird der Befestigungseinsatz in der Spritzgußform eingelegt und nach Schließen der Form abgespritzt. Der Befestigungseinsatz wird hierbei vom Kunststoff umflossen und in dem Dübel festgelegt. Hierbei wird der Kunststoff-Einsatz für die Hohlkammerprofile in einer vereinfachten Weise hergestellt: Auf die den Befestigungseinsatz mittels Hintergreifungselemente haltenden Rastsegmente kann verzichtet werden; ihre Funktion übernimmt die sich beim Umspritzen bildende Aufnahmehülse.

Bei einer bevorzugten Ausbildung ist die Scharnieraufnahme im Extrusionsprofil mittels eines aushärtenden Verguß-Harzes oder Klebers festgelegt. Vorteilhaft ist auch der durch Verrastung vorfixierte Befestigungseinsatz in dem Trog der Scharnieraufnahme mit einer Vergußmasse, vorzugsweise mit einem aushärtenden Verguß-Harz oder Kleber festgelegt. Als Vergußharz ist in beiden Fällen beispielsweise ein 2-Komponenten-Epoxyharz vorgesehen.

Als Befestigungseinsatz ist ein Einsatz mit einer einen Sperrdübel aufnehmenden Bohrung vorgesehen, wobei als Befestigungsmittel am Scharnier Sperrdübel vorgesehen sind. Vorteilhaft sind hier die Sperrdübel als Spreizdübel ausgebildet, die - nach einer Weiterbildung - an einen aus Kunststoff gebildeten Seitenflügel des Scharniers angeformt sind. Bei der vorgesehenen Befestigung mit Spreizdübel ist die Montage sehr einfach: Die Verbindung wird durch bloßes Zusammenstecken erhalten; ein Schlag auf den Spreizstift sichert sie.

Alternativ ist als Befestigungseinsatz ein Einsatz mit einer eine Schraube aufnehmenden Gewinde-Bohrung vorgesehen, wobei als Befestigungsmittel am Scharnier Schrauben vorgesehen sind. Bei einer weiteren Alternative ist als Befestigungsaufnahme ein Einsatz mit einer Bajonett-Aufnahme zur Aufnahme eines Bajonett-Verschlusses vorgesehen, wobei als Befestigungsmittel am Scharnier Bajonettverschlüsse vorgesehen sind. Mit der Schraub- und der Bajonettverbindung wird eine in einfacher Weise wieder lösbare Verbindung geschaffen. Dies ist besonders dann von Wichtigkeit, wenn - etwa bei in regelmäßigen Inspektionen - in Wartungsintervallen erfolgende Demontagen der Klappen notwendig sein sollten.

Das Wesen der Erfindung wird an Hand der in den Figuren 1 bis 9 dargestellten Ausführungsbeispiele näher erläutert; dabei zeigen
- Fig. 01:: Abdeckklappe, perspektivisches Schema, Ansicht,
Fig. 1a: Abdeckklappe mit Endstücken beidseitig,
Fig. 1b: Abdeckklappe mit Endstück einseitig, links,
Fig. 1c: Abdeckklappe mit Endstück einseitig, rechts;
- Fig. 02:: Abdeckklappen-Herstellung (schematische Darstellung);
- Fig. 03:: Querschnitt durch stranggepreßtes Klappenblatt;
- Fig. 04:: Klappenblatt mit zum Einsetzen vorbereiteten Endstükken an beiden Seiten (Aufsicht),
Fig. 4a: Klappenblatt mit Verstärkungssteg (Teilschnitt nach Schnittlinie A-A, Fig. 3),
Fig. 4b: Klappenblatt mit Verstärkungsnut (Teilschnitt nach Schnittlinie B-B, Fig. 3),
- Fig. 05:: Schnitt durch den Randbereich eines gekrümmtes, stranggepreßtes Vielkammer-Extrusionsprofil mit angesetzten Scharnerteil;
- Fig. 06:: Dübel zum Einsetzen in stranggepreßte Vielkammer-Extrusionsprofile, Aufsicht;
- Fig. 07:: Dübel zum Einsetzen in stranggepreßte Vielkammer-Extrusionsprofile nach Fig. 2 (Schnittlinie A-A, Fig. 6), dargestellt mit einem (noch nicht eingesetzten) Schraubeinsatz;
- Fig. 08:: Einen Dübel mit eingespritztem Schraubeinsatz;
- Fig. 09:: Befestigung Klappenverschluß am stranggepreßten Klappenblatt
Fig. 9a: Einzelheit Einsetzen von Rahmen-Seiten- und Rahmen-Mittelteil sowie Aufsetzen des Rahmen-Deckels (schematisch),
Fig. 9b: Einzelheit Seitenteil - Seitansicht
Fig. 9c: Einzelheit Mittelteil - Querschnitt,
Fig. 9d: Einzelheit Einlagen mit Schraubaufnahme (im Querschnitt des Rahmen-Seitenteils gemäß Schnittlinie A-A Fig. 9a).

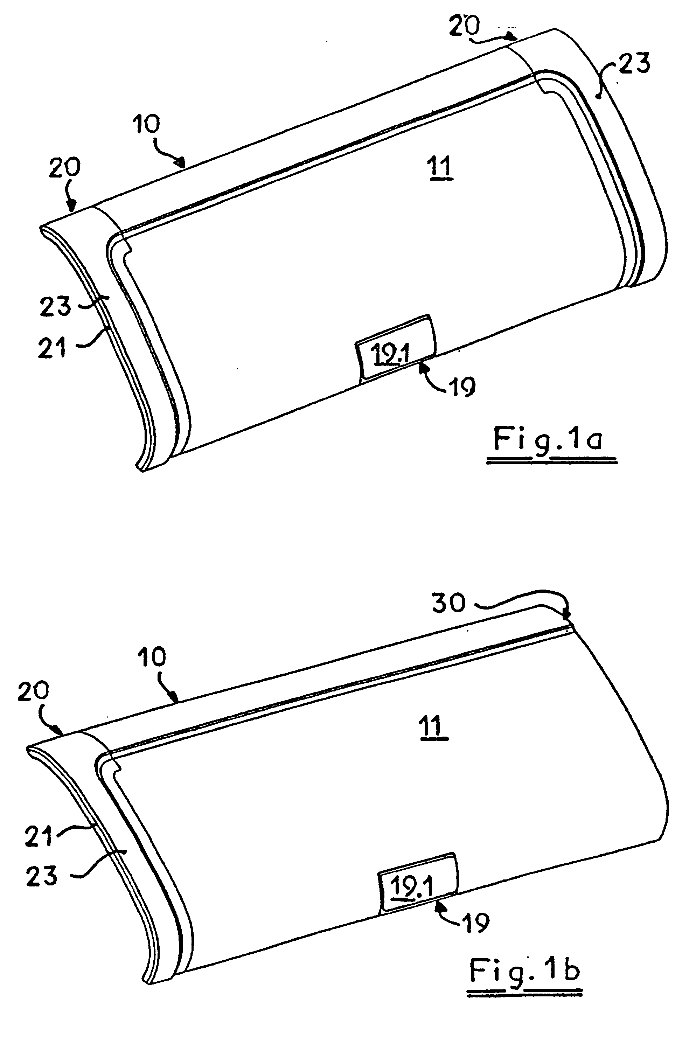

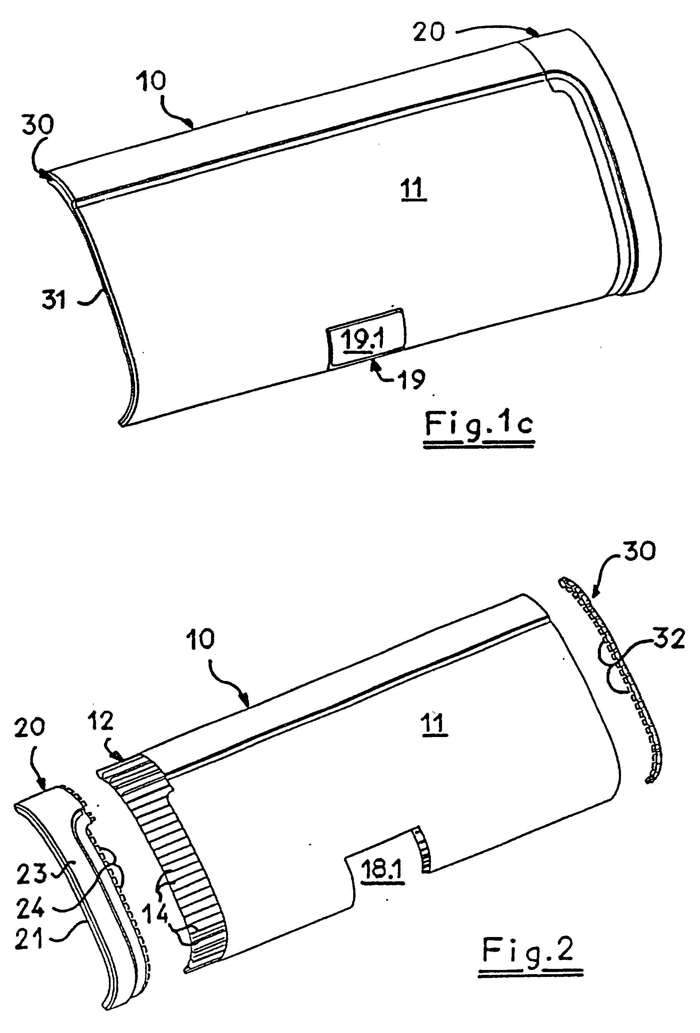

Die Figuren 1 stellen Ansichten von Abdeckklappen unterschiedlicher Ausbildung für ein Hat-Rack eines Flugzeuges in einem perspektivischen Schema dar. Bei der Ausführungsform nach Figur 1a ist die Abdeckklappe so ausgebildet, daß an das Vielkammerprofil des Mittelstückes 10 beidseits Endkappen 20 angesetzt sind, und daß etwa mittig im Mittelstück 10 eine Verschlußeinrichtung 19 vorgesehen ist, deren Handgriffplatte 19.1 sichtbar ist. Die Figuren 1b und 1c zeigen eine Ausführungsform einer Abdeckklappe, bei der jeweils nur eine Endkappe 20 an das von dem Vielkammerprofil gebildeten Mittelstück 10 angesetzt ist, bei der Ausführungsform nach Fig. 1b links, bei der nach Fig. 1c rechts. In allen Fällen sind die seitlichen Ränder mit Randabdeckungen 30 verschlossen.

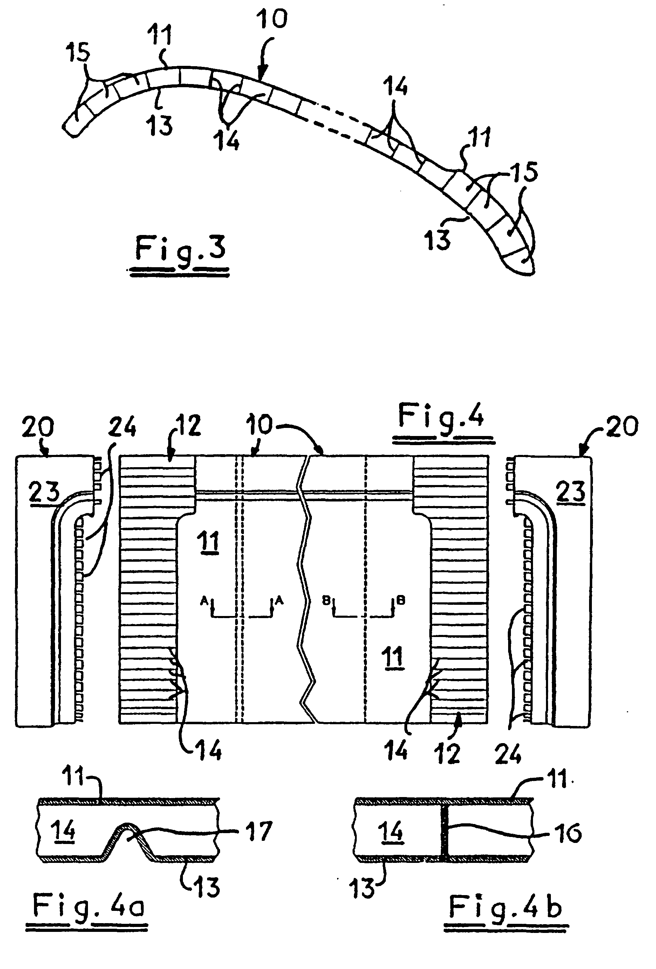

Die Figur 2 deutet (schematisch) den Herstellungsgang einer solchen Abdeckklappe an: Zunächst wird ein extrudiertes Vielkammerprofil als Mittelstück 10 so abgelängt, daß - unter Berücksichtigung der einoder doppelseitig anzufügenden Endkappen 20 - die Länge der Abdeckklappe erreicht wird. Sodann werden im Bereich anzusetzender Endkappen 20 die Oberseitenplatten 11 soweit ausgenommen, wie die Oberseitenwände 23 der Endkappen 20 reichen. Die Stege 14 (und die zwischen den Stegen 13 liegenden Kammern 15 - Fig. 3) des Vielkammerprofils werden dabei freigelegt, und die Unterseitenplatte 13 wird sichtbar. Neben diesem Ausnehmungsbereich 12 der Oberseitenplatte 11 wird weiter eine Ausnehmung 18.1 vorgesehen, in die die Verschlußeinrichtung 19 mit Griffplatte 19.1 (Fig. 1) eingefügt werden kann. Darauf wird die Endkappe 20 an diese so geöffneten Enden des Mittelstückes 10 angefügt. Dieses Endstück 20 weist im Bereich der rippenartigen Stege 14 des Mittelstückes 10 Zungen 24 auf, die in die Stegkammern 15 eingreifen und in diese eingeführt, dort durch Verschweißen oder Verkleben festgelegt werden. Dabei können - entsprechend Figur 4 - beide Seiten des stranggepreßten Mittelstücks 10 mit Endkappen 20 versehen werden. Wird eine der offenen Seiten des stranggepreßten Mittelstücks 10 mit einer - ebenfalls im Spritzgießverfahren geformten - Randabdeckung 30 versehen, wird diese mit ihren Zungen 32 ebenfalls in die Stegkammern 15 des Mittelstücks 10 eingeführt und dort analog zur Endkappe 20 festgesetzt. Die Seitenwandung 31 verschließt dann die offene Seite des stranggepreßten Vielkammerprofils des Mittelstücks 10. Es versteht sich von selbst, daß auch die Endkappe 20 mit offener Seite ausgebildet sein kann; ist dies der Fall, wird diese offene Seite mit eben einer solchen Randabdeckung 30 verschlossen. Sowohl die Endkappen 20 als auch die Randabdeckugen 30 werden - wenn notwendig - in Rechts- und Links-Ausführung gespritzt.

Die Figur 3 zeigt einen (gebrochenen) Querschnitt eines extrudierten Vielkammerprofils eines Mittelstückes 10 einer Abdeckklappe, bei dem eine Vielzahl von Stegen 14 dessen Ober- und Unterseitenplatten 11 und 13 verbinden. Durch diese Ausbildung als extrudierbares Vielkammerprofil in der Art einer Doppelstegplatte werden - entsprechend der Steg-Anzahl - eine Vielzahl von Stegkammern 15 gebildet. Solche doppelstegplattenartigen Ausbildungen sind materialsparend und somit wirtschaftlich und gewichtsarm herzustellen; sie weisen dennoch eine große, auch hohen Beanspruchungen widerstehende Stabilität auf.

Die Lage der (hier) beiden Endkappen 20 zu dem von dem stranggepreßten Vielkammerprofil gebildeten Mittelstück 10 zeigt Figur 4 in Aufsicht. Dabei übergreifen die überstehenden Oberseitenwände 23 der Endkappen 20 die stehengebliebenen Stege im Ausnehmungsbereich 12 des Mittelstücks 10, während die Zungen 24 in die Stegkammern 15 eingeführt werden. Dies führt zu einer "Quasi-Verzahnung"; die stehengebliebenen Stege des Vielkammerprofils des Klappenblattes 10 stützen dabei die Oberseitenwand 23 der Endkappe 20, das so mit dem Mittelstück 10 zu der dargestellten: Abdeckklappe fest verbunden werden kann. Soweit offene Seiten des Mittelstücks 10 (oder der Endkappe 20) verbleiben, vervollständigt eine Randabdeckung 30 die Ausbildung des Randverschlusses. Schließlich wird die Verschlußeinrichtung 19 (Fig. 1) in die ausgenommene Kammer 18.1 eingeführt und dort festgelegt. Damit ist die Abdeckklappe soweit fertiggestellt, daß es nach Aufbringen eines entsprechenden Finishs lediglich das Ansetzen des Verschlusses und der Scharniere bedarf, um die Abdeckklappe einbauen zu können. Wird eine weitere Verstärkung benötigt, werden in dem stranggepeßten Mittelstück 10 - vorteilhaft symmetrisch zur Mitte - quer zu den Stegen des Strangpreß-Profils Verstärkungsstege 16 oder Verstärkungsnuten 17 vorgesehen. Zum Einbringen der Verstärkungsstege wird die Unterseitenplatte 13 einschließlich der Stege geschlitzt, so daß der Verstärkungssteg 16 eingesetzt und verschweißt oder verklebt werden kann. Für das Einbringen einer Verstärkungsnut 17 wird die Unterseitenplatte 13 unter Erwärmung des Materials nutartig verformt, wobei das Material der Stege des Strangpreßprofils im Nutbereich verdrängt wird.

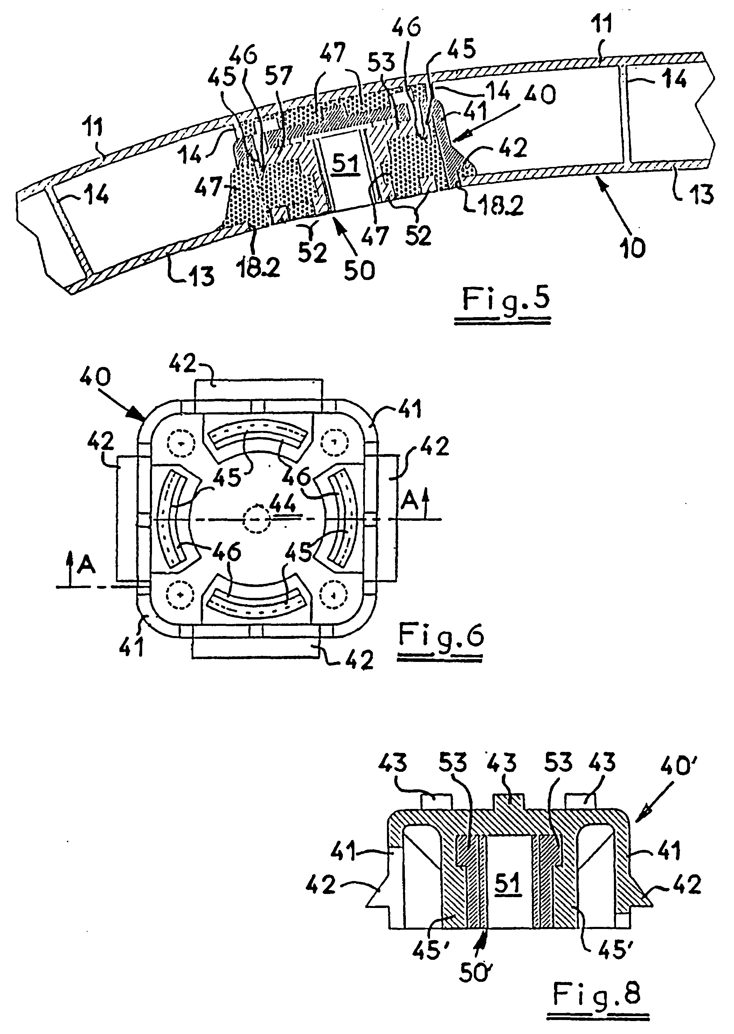

Zum Ansetzen der Scharniere ist ein in den Figuren 5 gezeigter, in ein gekrümmtes stranggepreßtes Mehrkammer-Extrusionsprofil 10 mit einer Randverdickung und abgerundeter Endkante 10' eingesetzte Befestigungseinsatz mit einem Dübel 40 vorgesehen, in den ein Schraubeinsatz 50 eingefügt ist. Das Scharnier 60 (nicht dargestellt) wird mit seiner Grundplatte 62 mittels der in die Schraubeinsätze 50 der Dübel 40 eingeschraubten Schrauben 61 an der Klappe gehalten und ist über das Auge 63 an ein gestellfestes Gegenstück mittels eines Bolzens (beide nicht näher dargestellt) schwenkbar angelenkt. Ein Ausleger 64 mit einem Langloch 65 zum Anlenken und Einstellen einer das Öffnen verlangsamenden Gasdruckfeder (nicht näher dargestellt) vervollständigt den Scharnieransatz 60. Um diesen Dübel 40 einsetzen zu können, wird die Oberseitenplatte 11 oder die Unterseitenplatte 13 des als stranggepreßten Vielkammer-Extrusionsprofils ausgebildeten Mittelstückes 10 der Klappe mit einer Ausnehmung 18.2 versehen, die so groß ist, daß zwar der Grundkörper 41 des Dübels 40 durchgeführt werden kann, dessen äußere Rastnasen 42 jedoch die Ränder der Ober- oder Unterseitenplatte 11 oder 13 seitlich dieser Ausnehmung 18.2 hintergreifen. Somit wird der Dübel 40 zumindest nach dem Einsetzen gehalten. In diesen Dübel 40 wird ein Befestigungseinsatz 50 - hier ohne Beschränkung auf Schraubverbindung als Schraubeinsatz dargestellt - eingesetzt, wobei dieser Einsatz 50 einen unteren Bund 53 aufweist, der etwa formschlüssig in den Aufnahmering 44 (Fig. 6) einsetzbar ist und von übergreifenden Rastnasen 46 der Rast-Segmente 45 gehalten wird. Schließlich werden Dübel 40 und Einsatz 50 mittels einer aushärtenden Vergußmasse oder einem aushärtenden Kleber 47 in dem stranggepreßten Vielkammer-Extrusionsprofil des Mittelstückes 10 festgelegt, wobei als oberer Abschluß der obere Bund 52 dient, der bündig in der Fläche der äußeren Seite desjenigen der Seitenblätter liegt, das mit der Ausnehmung 18.2 zum Einsetzen des Dübels 40 versehen ist (hier dargestellt Unterseitenplatte 13). Die eingesetzte Schraubhülse 51 ist dabei frei und zugängig, so daß ein anzusetzendes Teil durch Einschrauben einer Befestigungsschraube mit dem stranggepreßten Vielkammer-Extrusionsprofil des Mitttelstückes 10 verbunden werden kann.

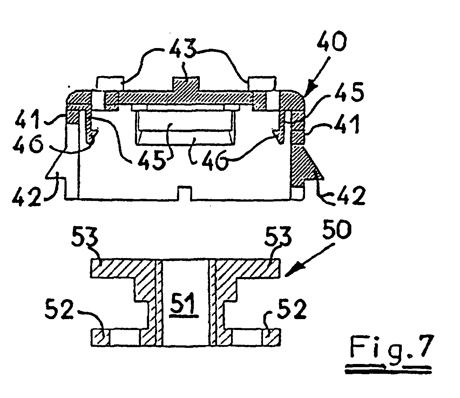

Der Dübel 40 selbst ist in den Figuren 6 und 7 im Einzelnen näher dargestellt, wobei die Figur 7 einen Schnitt gemäß Schnittlinie A-A (Fig. 6) zeigt. Der im wesentlichen kubische Grundkörper 41 mit rechteckigem Querschnitt, dessen Abmessungen zu denen des Ausschnittes 18.2 in einem der Seitenplatten - dargestellt ist die Ausnehmung in der Unterseitenplatte 3 - korrespondieren, weist an allen vier Seiten überstehende äußere Rastnasen 42 auf, mit denen der Dübel 40 in dem Ausschnitt 18.2 zumindest anfänglich festlegbar ist. Unter dem Grundkörper 41 sind Fußnocken 43 vorgesehen, wobei die Höhe des Grundkörpers 41 mit den Nocken 43 im wesentlichen der Tiefe der Kammern des stranggepreßten Hohlkammerprofils des Mittelstückes 10 entspricht (die in Figur 5 dargestellten Spalten zwischen den Fußnocken 43 und der Innenseite der Oberseitenplatte 12 sowie der Oberkante der äußeren Rastnasen 42 und der Innenseite der Unterseitenplatte 13 sind zur besseren Verdeutlichung übertrieben groß dargestellt). Im Inneren des Dübels befindet sich ein Aufnahmekreis 44, gebildet von Rast-Segmenten 45, in der Darstellung der Figur 6 vier Rast-Segmente, wobei diese Anzahl nicht an die hier gezeigten vier gebunden ist und von der Ausbildung des Dübels 40 sowie des Einsatzes 50 abhängt. Mit ihren Rastnasen 46 übergreifen die Rast-Segmente 45 den unteren Bund 53 des Einsatzes 50 (Fig. 5) und halten diesen in seiner Position. In der Figur 7 ist weiter in der Einsetz-Position der Befestigungseinsatz 50 dargestellt. Dieser im allgemeinen als Metallstück hergestellte Einsatz besteht aus einem Zentralkörper mit dem als Gewindehülse 51 dargestellten Aufnahmeloch, an den ein unterer Bund 53 und ein oberer Bund 52 mit (nicht näher bezeichnete) Durchbrüchen angeformt sind.

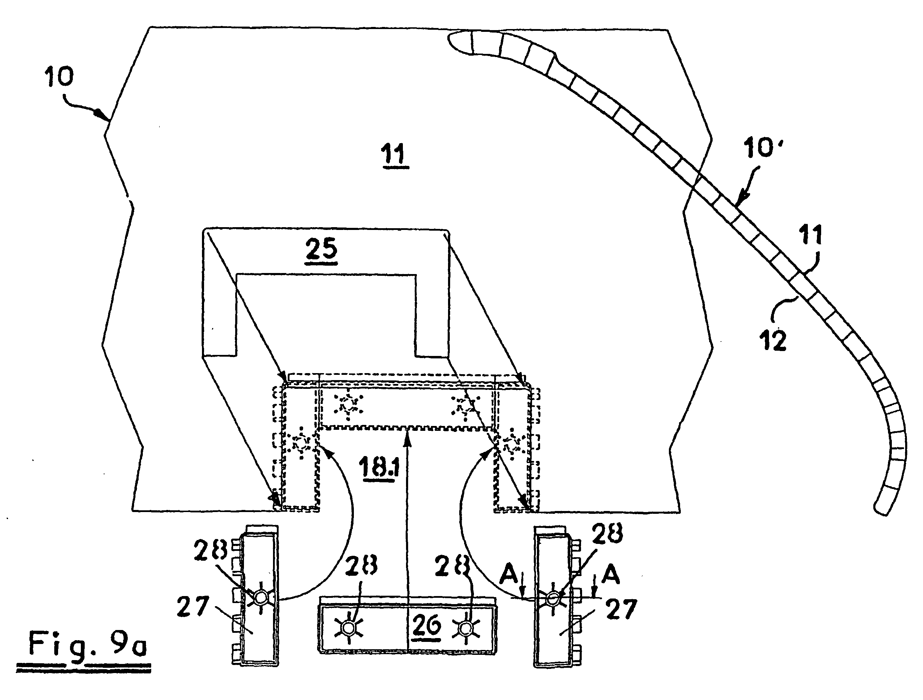

Die Figur 8 zeigt einen in ein stranggepreßtes Vielkammer-Extrusionsprofil des Mittelstückes 10 einsetzbaren Dübel 40'. Dieser Dübel 40' wird einstückig aus Kunststoff gespritzt, wobei der dafür konstruierte Befestigungseinsatz 50' in die Spritzgußform eingelegt wird und beim Spritzen vom Kunststoff umflossen und so festgelegt wird. Dieser Dübel 40' entspricht in seiner äußeren Form dem nach den Figuren 6 und 7, auf die verwiesen wird. Dieser Dübel 40' kann ohne weiteres anstelle eines der Dübel 40 eingesetzt werden. Er hintergreift mit seinen Nasen 42 die Wandung des stranggepreßten Hohlkammerprofils, wobei seine Fußnocken 43 etwa an der Innenseite der Unterseitenplatte 13 anliegen. Die Rastsegmente 45 sind hier - entsprechend der Herstellungweise im Spritzgußverfahren - zu einer Hülse 45' umgewandelt, die den Befestigungseinsatz 50' formschlüssig umgreift. Der Befestigungseinsatz 50' selbst weist lediglich einen unteren Bund 53 auf, ein oberer Bund ist bei dieser Konstruktion überflüssig. Zur Herstellung wird der Befestigungseinsatz 50' vor dem Spritzen in die Spritzgußform eingelegt, die dann geschlossen wird; nach dem Schliessen erfolgt der Schuß, bei dem der Befestigungseinsatz 20' vom Kunststoff umflossen wird. Bei der Entnahme des (vorgekühlten) Spritzgußteiles ist der Dübel 40' gebrauchsfertig.

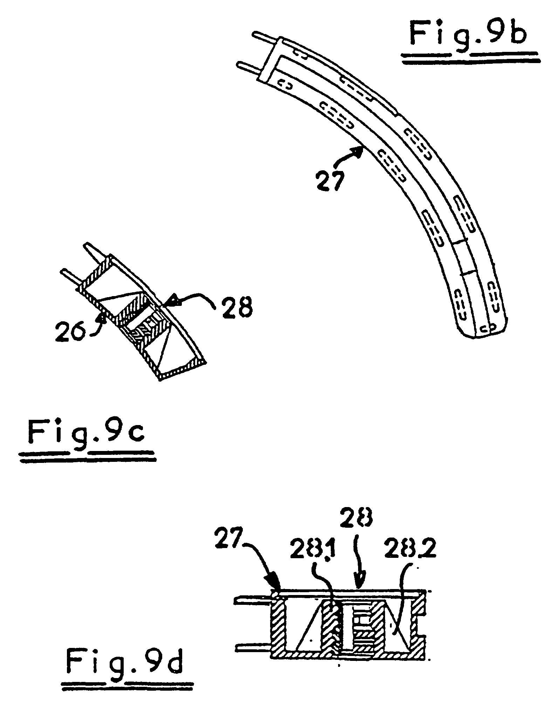

Die Figuren 9 zeigen die Befestigungs-Mittel des Klappenverschlusses im Einzelnen, wobei Fig. 9a das durch Pfeile angedeutete Einsetzen des Rahmen-Mittelteils 26 und der Rahmen-Seitenteile 27 in die Ausnehmung 18.1 (gestrichelt: Teile eingesetzt) des als Vielkammerprofil ausgebildeten Mittelstück des Klappenblattes 10, dessen Krümmung als Profilschnitt 10' seitlich angedeutet ist, und die Fig. 9b bis 9c Einzelheiten dieser Teile darstellen. Die durchgezeichneten Rahmen-Mittelteil 26 und die Rahmen-Seitenteile 27 sind in der Stellung vor dem Einsetzen und die gestrichelten dargestellten in der Stellung nach dem Einsetzen wiedergegeben. Mit ihren Zungen fassen sowohl Rahmen-Mittelteil 26 und Rahmen-Seitenteile 27 in die Stegkammern 15, die von der Ausnehmung 18.1 "Verschluß" angeschnitten sind, wobei die Rahmen-Seitenteile 27 einzelne Zungen-Paare und das Rahmen-Mittelteil 26 ein durchgehendes Zungen-Paar aufweisen, entsprechend den vom Ausschnitt getroffenen Stegen. Dabei sind die Zungenpaare so angelegt, daß sie an den Innenseiten der Oberseitenplatte 11 bzw. der Unterseitenplatte 13 anliegen und verschweißt bzw. verklebt werden können. Diese so festgelegten Rahmen-Mittelteil 26 und Rahmen-Seitenteile 27 werden danach mittels des Rahmendeckels 25 abgedeckt. Sowohl Rahmen-Mittelteil 26 als auch Rahmen-Seitenteil 27 sind in ihrer Krümmung der Krümmung des Klappenblattes angepaßt und mit metallischen Einlage 28 versehen, die mit den Befestigungsmitteln des (nicht näher dargestellten) Klappenverschlusses 19 mit Handgriffplatte 19.1, im allgemeinen Schrauben oder Nieten, die in den Zentralkörper 28.1 der metallischen Einsätze 28 eingeschraubt bzw. eingedrückt und festgesetzt werden. Diese metallischen Einsätze sind in den Kunststoff der Rahmen-Mittel- bzw. -Seitenteile 26 bzw. 27 eingefügt; bei der Herstellung dieser Teile als Spritzgußteile werden die Einsätze 28 in die Spritzguß-Form eingesetzt und mit umspritzt. Um ein Verdrehen des eingefügten Zentralkörpers 28.1 der Einsätze 28 in Rahmen-Mittelbzw. -Seitenteil 26 bzw. 27 zu verhindern und die Kraftübertragung zu begünstigen, sind an den Zentralkörper 28.1 Festlegeflügel 28.2 angeformt, die in dem Kunststoff von Rahmen-Mittel- bzw. -Seitenteil 26 bzw. 27 verankert sind.

## Patentansprüche

1. Klappe für Ablagefächer aus Kunststoff, insbesondere für Gepäckablagen in Land-, Wasser und Luftfahrzeugen mit einem Klappenblatt, **dadurch gekennzeichnet, dass** das Klappenblatt ein als Hohlkammerprofil extrudiertes Mittelstück (10) beinhaltet, an das zumindest an einer der offenen Seiten eine gespritzte Kunststoff-Endkappe (20) aufgesetzt ist.

2. Klappe nach Anspruch 1, **dadurch gekennzeichnet, dass** die andere offene Seite des Mittelstückes (10) mit einer zweiten Kunststoff-Endkappe (20) versehen ist, wobei vorzugsweise beide Endkappen (20) spiegelsymmetrisch zueinander ausgebildet sind.

3. Klappe nach Anspruch 1 oder 2, **dadurch gekennzeichnet, dass** eine offene Seite vom Mittelstück (10) oder von der Kunststoff-Endkappe (20) mit einer Kunststoff-Randabdeckung (30 versehen ist.

4. Klappe nach Anspruch 3, **dadurch gekennzeichnet, dass** jede Kunststoff-Endkappe (20) oder das Mittelstück (10) Aufnahmen für die die Anlenkung an das Fahrzeug bewirkenden Scharniere aufweist.

5. Klappe nach Anspruch 4, **dadurch gekennzeichnet, dass** ein in die Aufnahme (18.2) des Unterseitenblattes (13) oder des Oberseitenblattes (11) des Mittelstückes (10) eingesetzter Befestigungsein satz mit einem in die Aufnahme (18.2) im wesentlichen formschlüssig eingesetzten trogförmig ausgebildeten Dübel (40) als Scharnieraufnahme vorgesehen ist, wobei der Dübel (40) mit einem Befestigungseinsatz (50) versehen ist und bei rechteckiger oder runder Grundform vorzugsweise eine Höhe aufweist, die etwa der Höhe der Längsstege (14) des Mittelstückes (10) des Extrusionsprofils entspricht, wobei die Aufnahme (18.2) der Form des Grundkörpers (41) des Dübels (40) entspricht.

6. Klappe nach Anspruch *5*, **dadurch gekennzeichnet, dass** zumindest der Dübel (40) als als Spritzguss-Teil herstellbarer Kunststoff-Einsatz einen Befestigungseinsatz (50') eingespritzt enthält, wobei vorzugsweise im trogförmigen Inneren des Dübels (10) mit Rastnasen versehene Rastmittel vorgesehen sind, die mit dem Befestigungseinsatz (50) derart zusammenwirken, dass der in den Dübel (40) eingesetzte Befestigungseinsatz (50) nach Einrasten gesichert ist, wobei die Rastmittel einen zumindest aus ein Rast-Segmenten (45) bestehenden Aufnahmering (44) für den Einsatz bilden.

7. Klappe nach einem der Ansprüche *5* bis *6,* **dadurch gekennzeichnet, dass** die Scharnieraufnahme mit Dübel (40) und Befestigungseinsatz (50) im als Extrusionsprofil ausgebildeten Mittelteil (10) mittels eines aushärtbaren Verguss-Harzes oder Klebers festgelegt ist.

8. Klappe nach einem der Ansprüche *5 bis 7*, **dadurch gekennzeichnet, dass** der Befestigungseinsatz (50) mit einer eine Schrauben oder einen Sperrdübel aufnehmenden Bohrung versehen ist, wobei als Befestigungsmittel am Scharnier Schrauben oder Sperrdübel vorgesehen sind, wobei vorzugsweise zumindest ein Seitenflügel des Scharniers aus Kunststoff gebildet ist, an den die Sperr- bzw. Spreizdübel angeformt sind.

9. Klappe nach einem der Ansprüche *5* bis *7,* **dadurch gekennzeichnet, dass** der Befestigungseinsatz (50) mit einer Bajonett-Aufnahme zur Aufnahme eines Bajonett-Verschlusses vorgesehen ist, wobei als Befestigungsmittel am Scharnier Bajonettverschlüsse vorgesehen sind, wobei vorzugsweise zumindest ein Seitenflügel des Scharniers aus Kunststoff gebildet ist, an den Bajonett-Verschlussteile drehbar angeformt sind.

10. Klappe nach einem der Ansprüche 1 bis *9*, **dadurch gekennzeichnet, dass** das Mittelstück (10) des Klappenblattes vorzugsweise mittig mit einer Ausnehmung (18.1) versehen ist, in die ein den Klappenverschluss (19) mit Sperrriegel und Handgriffplatte (19.1) aufnehmendes Spritzgussteil einsetzbar ist.

11. Klappe nach Anspruch *10,* **dadurch gekennzeichnet, dass** in die Ränder der Ausnehmung (18.1) ein Rahmen-Mittelteil (26) und beidseits je ein Rahmen-Seitenteil (27) eingesetzt sind, wobei jedes der Seitenteile (26, 27) mindestens einen metallischen Einsatz (28) zur Aufnahme von Befestigungsmitteln des Klappenverschlusses (19) *aufweist.*

12. Klappe nach einem der Ansprüche 1 bis *11,* **dadurch gekennzeichnet, dass** Kunststoff-Endkappe (20) und Mittelstück (10) des Klappenblattes so ausgeformt sind, dass sie sich teilweise überlappen, wobei die überlappenden flächigen Teile in unterschiedlichen, durch die Steghöhe gegebenen Höhen liegen.

13. Klappe nach einem der Ansprüche 1 bis *11,* **dadurch gekennzeichnet, dass** Kunststoff-Endkappe (20) und Mittelstück (10) des Klappenblattes so ausgeformt sind, dass sie sich teilweise überlappen, wobei vorzugsweise die Oberseitenwand (11) des Mittelstückes (10) im Bereich der Überlappung (12) entfernt ist, so dass sich die Oberseitenwand (23) der Endkappe (20) auf den Stegen (14) abstützt.

14. Klappe nach einem der Ansprüche 1 bis *13,* **dadurch gekennzeichnet, dass** das Mittelstück (10) des Kunststoff-Klappenblattes so ausgeformt ist, dass es im Abstand zu seiner Endkante eine quer zur Stegrichtung verlaufende Verstärkung in Form eines eingesetzten Verstärkungs-Steges (16) oder einer eingeprägten Verstärkungs-Nut (17) aufweist.

15. Klappe nach einem der Ansprüche 1 bis *14,* **dadurch gekennzeichnet, dass** die Kunststoff-Endkappe (20) mit Zungen (24) versehen ist, die derart angeordnet sind, dass sie beim Zusammenfügen zumindest in einige der Stegkammern (15) des extrudierten Mittelstückes (10) des Kunststoff-Klappenblattes einsetz- und dort fixierbar sind.

16. Klappe nach einem der Ansprüche 1 bis *15,* **dadurch gekennzeichnet, dass** die Berührungsstellen von Kunststoff-Endkappe (20) und Mittelstück (10) des Kunststoff-Klappenblattes verschweißt oder verklebt sind.

17. Klappe nach einem der Anspruch 1 bis *16,* **dadurch gekennzeichnet, dass** als Kunststoff für Extrusion des Mittelstückes (10) und/oder für Spritzguss der Endkappen bzw. der Randabdeckung (30) ein amorphes Thermoplast wie beispielsweise Polyetherimide eingesetzt ist.

## Claims

1. Hinged lid for plastic storage compartments, especially for luggage bins in land, water and air-based craft with a hinged leaf, **characterised in that** the hinged leaf comprises a central piece (10), which is extrusion moulded into a hollow chamber section, on which an injection moulded plastic end cap (20) is placed on at least one of the open sides.

2. Hinged lid as claimed in Claim 1, **characterised in that** the other open side of the central piece (10) is provided with a second plastic end cap (20), with both end caps preferably being formed with mirror symmetry relative to one other.

3. Hinged lid as claimed in Claim 1 or 2, **characterised in that** one open side of the central piece (10) or of the plastic end cap (20) is provided with a plastic edge cover (30).

4. Hinged lid as claimed in Claim 3, **characterised in that** each plastic end cap (20) or the central piece (10) has receptacles for the hinges effecting the hinging to the craft.

5. Hinged lid as claimed in Claim 4, **characterised in that** a fixing insert inserted into the receptacle (18.2) of the underside leaf (13) or the upper side leaf (11) of the central piece (10) is provided with a tray-shaped dowel (40) essentially positively inserted into the receptacle (18.2) and intended as a hinge receptacle, the dowel (40) being provided with a fixing insert (50) and, having a basic rectangular or circular form, preferably being of a height which corresponds approximately to the height of the longitudinal fins (14) of the central piece (10) of the extrusion moulded section (14), the receptacle (18.2) corresponding to the form of the basic body (41) of the dowel (40).

6. Hinged lid as claimed in Claim 5, **characterised in that** at least the dowel (40) has moulded therein as an injection moulded part a fixing insert (50'), which can be produced as a plastic insert, with locking means with detents preferably being provided in the tray-shaped interior of the dowel (10), said locking means interacting with the fixing insert (50) in such a way that the fixing insert (50) inserted into the dowel (40) is secured upon engagement, the locking means forming a receiving ring (44) for the insert comprising at least one locking segment (45).

7. Hinged lid as claimed in any one of Claims 5 to 6, **characterised in that** a hinge receptacle with a dowel (40) and a fixing insert (50) is fixed in the central piece (10), which is formed as an extrusion section, by means of an age-hardening sealing resin or adhesive.

8. Hinged lid as claimed in any one of Claims 5 to 7, **characterised in that** the fixing insert (50) is provided with a bore for receiving a bolt or a locking dowel, with bolts or locking dowels being provided as fixing means to the hinge, at least one side wing of the hinge preferably being formed from plastic and having integrally moulded thereon the locking or straddling dowels.

9. Hinged lid as claimed in any one of Claims 5 to 7, **characterised in that** the fixing insert (50) is provided with a bayonet-type receptacle for receiving a bayonet closure, bayonet closures being provided as fastening means for the hinge, with at least one side wing of the hinge preferably being formed from plastic and having rotatably moulded thereon bayonet closure parts.

10. Hinged lid as claimed in any one of Claims 1 to 9, **characterised in that** the central piece (10) of the hinged leaf is provided, preferably centrally, with a recess (18.1). into which an injection moulded part which receives the hinged cover (19) with a safety bolt and handle plate (19.1) can be inserted.

11. Hinged lid as claimed in Claim 10, **characterised in that** a frame central piece (26) and a frame side piece (27) each on both sides are inserted into the edges of the recess (18.1). each of the side pieces (26.27) having at least one metal insert (28) for receiving the hinged cover's fixing means (19).

12. Hinged lid as claimed in any one of Claims 1 to 11. **characterised in that** the plastic end cap (20) and central piece (10) of the hinged leaf are designed in such a way that they partially overlap, the overlapping planar pieces being located at varying levels determined by the fin height.

13. Hinged lid as claimed in any one of Claims 1 to 11, **characterised in that** the plastic end cap (20) and central piece (10) of the hinged leaf are formed such that they partially overlap, the upper side wall (11) of the central piece (10) being removed in the area of the overlap (12), so that the upper side wall (23) of the end cap (20) rests on the fins (14).

14. Hinged lid as claimed in any one of Claims 1 to 13, **characterised in that** the central piece (10) of the plastic hinged leaf is designed such that it has a reinforcement running transversely to the direction of the fins in the form of an inserted reinforcing fin (16) or an impressed reinforcing groove (17) at a distance from its end cap.

15. Hinged lid as claimed in any one of Claims 1 to 14, **characterised in that** the plastic end cap (20) is provided with tongues (24) which are positioned in such a way that they can be inserted at least into some of the fin chambers (15) of the extruded central piece (10) of the plastic hinged leaf on being joined together and can be fixed there

16. Hinged lid as claimed in any one of Claims 1 to 15, **characterised in that** the contact points of the plastic end cap (20) and the central piece (10) of the plastic hinged leaf are heat-sealed or glued.

17. Hinged lid as claimed in any one of Claims 1 to 16, **characterised in that** an amorphous thermoplastic such as; for example, polyether imide is used as the plastic for extruding the central piece (10) and/or for injection moulding the end caps or the edge covering

## Revendications

1. Abattant pour casier de rangement en matière plastique, en articulier pour casier à bagages dans les véhicules terrestres, maritimes et aériens. comprenant un vantail rabattable **caractérisé en ce que** le vantail rabattable comporte une partie centrale (10) extrudée sous forme de profilé creux, et **en ce qu'**un cache d'extrémité (20) en matière plastique moulée par injection est monté sur au moins un des côtés ouverts.

2. Abattant selon la revendication 1, **caractérisé en ce que** l'autre côté ouvert de la partie centrale (10) est muni d'un deuxième cache d'extrémité (20) en matière plastique, les deux caches d'extrémité étant conçus de préférence symétriquement l'un par rapport à l'autre.

3. Abattant selon la revendication 1 ou 2, **caractérisé en ce qu'**un côté ouvert de la partie centrale (10) ou du cache d'extrémité (20) en matière plastique est muni d'une protection latérale (30) en matière plastique.

4. Abattant selon la revendication 3, **caractérisé en ce que** chaque cache d'extrémité (20) ou la partie centrale (10) sont munis de logements destinés à recevoir la charnière formant l'assemblage articulé contre le véhicule.

5. Abattant selon la revendication 4, **caractérisé en ce que**, pour former le logement de la charnière, il est prévu une pièce de fixation insérée, qui est emboîtée dans le logement (18.2) du vantail inférieur (13) ou du vantail supérieur (11) de la pièce centrale (10), et une cheville (40), qui est conçue en forme d'auge et emboîtée sensiblement par conjugaison de formes dans le logement (18.2), la cheville (40) étant munie d'une pièce de fixation insérée (50) et ayant une forme de base rectangulaire ou ronde, avec une hauteur de préférence pratiquement égale à la hauteur des ailettes longitudinales (14) de la partie centrale (10) du profilé extrudé, le logement (18.2) ayant une forme correspondant à celle du corps de base (41) de la cheville (40).

6. Abattant selon la revendication 5, **caractérisé en ce qu'**au moins la cheville (40) comporte une pièce de fixation insérée (50') injectée en matière plastique sous forme de pièce moulée par injection, sachant que des moyens de blocage munis de tétons de blocage sont prévus de préférence dans le volume intérieur en forme d'auge de la cheville (10). lesquels coopèrent avec la pièce de fixation insérée (50), de telle sorte que la pièce de fixation insérée (50), emboîtée dans la cheville (40), est bloquée en position après encliquetage, les moyens de blocage formant pour la pièce insérée une bague de réception (44) formée par au moins un segment d'encliquetage (45).

7. Abattant selon une des revendications 5 ou 6, **caractérisé en ce qu'**un logement pour charnière, avec la cheville (40) et une pièce de fixation insérée (50), est fixé, au moyen d'une résine à sceller durcissante ou d'une colle, dans la partie centrale (10) conçue sous forme de profilé extrudé.

8. Abattant selon une des revendications 5 à 7, **caractérisé en ce que** la pièce de fixation insérée (50) est munie d'une forure destinée à recevoir une vis ou une cheville de blocage, sachant que des vis ou des chevilles de blocage sont prévues comme moyens de fixation sur la charnière, au moins, de préférence, une branche latérale de la charnière étant réalisée en matière plastique, sur laquelle sont moulées les chevilles de blocage ou d'écartement.

9. Abattant selon une des revendications 5 à 7, **caractérisé en ce que** la pièce de fixation insérée (50) est prévue avec un logement à baïonnette destiné à recevoir une fermeture à baïonnette. sachant que des fermetures à baïonnette sont prévues comme moyens de fixation sur la charnière, au moins, de préférence, une branche latérale de la charnière étant réalisée en matière plastique, sur laquelle sont formées les fermetures à baïonnette de manière à pouvoir tourner.

10. Abattant selon une des revendications 1 à 9, **caractérisé en ce que** la partie centrale (10) du vantail rabattable est munie, de préférence au centre, d'une cavité (18.1), dans laquelle il est possible d'insérer une pièce moulée par injection destinée à recevoir le système de fermeture (19) de l'abattant muni d'un loquet et d'une manette en forme de plaquette (19.1).

11. Abattant selon la revendication 10. **caractérisé en ce que** dans les bords de la cavité (18.1) sont insérées une partie centrale de cadre (26) et sur chaque côté une partie latérale de cadre (27). chacune des parties latérales (26, 27) étant munie d'au moins une pièce métallique (28) destinée à recevoir les moyens de fixation du système de fermeture de l'abattant (19).

12. Abattant selon une des revendications 1 à 11. **caractérisé en ce que** les caches d'extrémité (20) en matière plastique et la partie centrale (10) du vantail rabattable sont conçus de telle sorte qu'ils se chevauchent en partie, les surfaces chevauchantes étant disposées sur différentes hauteurs définies par la hauteur des ailettes.

13. Abattant selon une des revendications 1 à 11, **caractérisé en ce que** les caches d'extrémité (20) en matière plastique et la partie centrale (10) du vantail rabattable sont conçus de telle sorte qu'ils se chevauchent en partie, sachant que, de préférence. la paroi supérieure (11) de la partie centrale (10) est supprimée dans la zone du chevauchement (12), de telle sorte que la paroi supérieure (23) du cache d'extrémité (20) est en appui sur les ailettes (14).

14. Abattant selon une des revendications 1 à 13, **caractérisé en ce que** la partie centrale (10) du vantail rabattable en matière plastique est conçue de telle sorte que, à une distance donnée de son bord d'extrémité, elle comporte un renforcement transversal au sens des ailettes et conçu sous la forme d'une nervure de renforcement (16) insérée ou d'une rainure de renforcement (17) incrustée.

15. Abattant selon une des revendications 1 à 14, **caractérisé en ce que** le cache d'extrémité (20) en matière plastique est muni de languettes (24), qui sont disposées de telle sorte que, au moment de l'assemblage, elles peuvent s'emboîter et se bloquer dans quelques-unes des cellules (15) formées entre les ailettes de la partie centrale (10) extrudée du vantail rabattable en matière plastique.

16. Abattant selon une des revendications 1 à 15, **caractérisé en ce que** les zones de contact entre le cache d'extrémité (20) en matière plastique et la partie centrale (10) du vantail rabattable en matière plastique sont assemblées par soudage ou collage.

17. Abattant selon une des revendications 1 à 16, **caractérisé en ce que** la matière plastique utilisée pour l'extrusion de la partie centrale (10) et/ou pour le moulage par injection des caches d'extrémité ou de la protection latérale (30) est un thermoplastique amorphe, tel que le polyétherimide
